# EUROPEAN PATENT APPLICATION

(11) **EP 2 955 736 A1**
(43) Date of publication of application: **16.12.2015**
(21) Application number: 15170296.6
(22) Date of filing: 02.06.2015
(51) Int. Cl.: H01H 33/59, H01H 9/54, H01H 71/46

(54) **CIRCUIT BREAKER AND METHOD OF CONTROLLING THE SAME**

(30) Priority: 13.06.2014 KR 20140072235
(71) Applicant: LSIS Co., Ltd., Anyang-si, Gyeonggi-do 431-848 (KR)
(72) Inventor: LIM, Ui Jai, Chungcheongbuk-do (KR)
(74) Representative: Grönlund, Tim Linus Wilhelm

(57) **Abstract**

The present invention relates to a circuit breaker and a method of controlling the same. More specifically, the present invention is to provide a circuit breaker capable of performing an interruption operation and an interruption monitoring function through an integrated control contact for transmitting a control signal, in order to solve the conventional problem, i.e., a structural problem due to separation of control contacts, and a malfunction of a monitoring function when an interlock is set, and a method of controlling the circuit breaker. With such a configuration, the circuit breaker can have a simplified structure, and can be designed and controlled more easily and simply.

## Description

### BACKGROUND OF THE INVENTION

### 1. Field of the Invention

The present invention relates to a circuit breaker and a method of controlling the same, and more particularly, to a circuit breaker capable of performing an interruption operation and an interruption monitoring function through an integrated control contact, and a method of controlling the same.

### 2. Background of the Invention

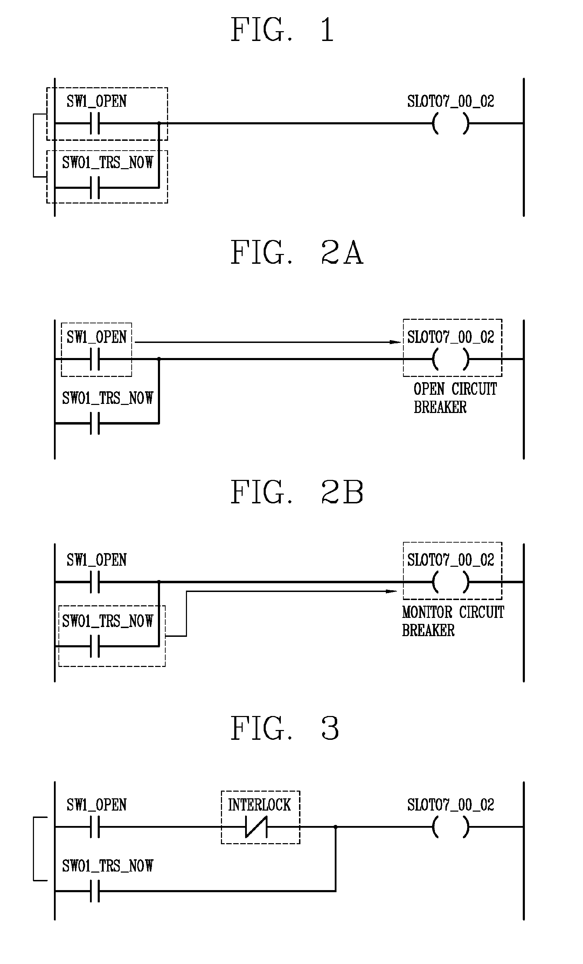

FIG. 1 is a sequence view 1 illustrating a configuration and an operation of a circuit breaker in accordance with the conventional art. FIG. 2A and FIG. 2B are a sequence view 2A and 2B illustrating a configuration and an operation of a circuit breaker in accordance with the conventional art. FIG. 3 is a sequence view 3 illustrating a configuration and an operation of a circuit breaker in accordance with the conventional art.

As shown in FIG. 1, the conventional circuit breaker has a configuration that a command contact for opening the circuit breaker (SW1_OPEN) and a TRS contact for trip relay supervising (TRS) of the circujit breaker (SW01_TRS_NOW) are separated from each other. The two contacts are separated from each other for the respective functions.

As shown in FIG. 2A, in the conventional circuit breaker, the SW1_OPEN is used to open the circuit breaker. As shown in FIG. 2B, the SW01_TRS_NOW is used to check whether a trip relay is normally operated even if the circuit breaker is not operated, and to check whether the circuit breaker is controllable.

However, the conventional circuit breaker may have the following problems.

Firstly, if a user does not set a logic to a programmable logic controller (PLC) despite his or her desire to use the TRS now, a relay is not output from the TRS contact. This may cause the TRS contact not to precisely perform its function.

Further, as shown in FIG. 3, in a state where the circuit breaker cannot be open due to an interlock set to the SW1, the SW01_TRS may erroneously display a connected state of the circuit breaker and a state of the contacts, as a 'normal' state.

In the conventional art, TRS monitoring may be executed regardless of whether the circuit breaker is controllable or not. That is, in a case where a command to open the circuit breaker is interlocked to an intermediate logic, if a user directly connects the TRS contact to an open terminal of the circuit breaker, a state of the circuit breaker is displayed as a 'normal' state. In this case, the state of the circuit breaker is displayed as a 'normal' state, even in a situation where the circuit breaker cannot be open. In order to solve such a problem, if the command contact and the TRS contact of the circuit breaker are integrated as a single contact, the same logic is configured to allow an open or closed state of the circuit breaker to be checked.

Further, a command for controlling the circuit breaker is a logic absolutely checked by a user, and a user should selectively set a logic to the TRS. Accordingly, if no logic is added to the TRS, a corresponding function cannot be executed.

### SUMMARY OF THE INVENTION

Therefore, an aspect of the detailed description is to provide a circuit breaker capable of performing an interruption operation and an interruption monitoring function through an integrated control contact for transmitting a control signal, in order to solve the conventional problem, i.e., a structural problem due to separation of control contacts, and a malfunction of a monitoring function when an interlock is set, and a method of controlling the circuit breaker.

To achieve these and other advantages and in accordance with the purpose of this specification, as embodied and broadly described herein, there is provided a circuit breaker, including: a switching unit configured to perform an interruption operation of the circuit breaker; and a controller configured to transmit a control signal for controlling the switching unit to the switching unit through an integrated control contact, wherein the controller selectively transmits, to the switching unit, one of an interruption operation signal for executing the interruption operation, and an interruption monitoring signal for checking whether the interruption operation is executable or not based on a state of the switching unit.

In an embodiment, the switching unit may be closed at ordinary times, but may be open when operated.

In an embodiment, by the interruption operation signal, the switching unit which is closed at ordinary times may be open.

In an embodiment, based on the interruption monitoring signal, an open or closed state of the switching unit which is closed at ordinary times may be checked.

In an embodiment, if the switching unit is closed as a determination result by the interruption monitoring signal transmitted to the switching unit, the controller may determine that an interruption operation is executable.

In an embodiment, if the switching unit is open as a determination result by the interruption monitoring signal transmitted to the switching unit, the controller may determine that an interruption operation is being executed.

In an embodiment, the switching unit may include an interlock contact portion configured to prevent an interruption operation. The interlock contact portion may be operated when an interruption operation of the circuit breaker should be prevented. The interlock contact portion may be closed at ordinary times but is open when operated, thereby preventing the control signal from being transmitted to the switching unit.

In an embodiment, if the interruption monitoring signal is not transmitted to the switching unit as the interlock contact portion is open, the controller may determine that an interruption operation is not required.

To achieve these and other advantages and in accordance with the purpose of this specification, as embodied and broadly described herein, there is also provided a method of controlling a circuit breaker, including: selectively transmitting, to a switching unit, one of an interruption operation signal for executing an interruption operation, and an interruption monitoring signal for checking whether the interruption operation is executable or not based on a state of the switching unit which performs the interruption operation; and operating the switching unit according to the signal, or checking a state of the switching unit.

In an embodiment, the switching unit may be closed at ordinary times, but may be open when operated. The switching unit may be open by the interruption operation signal.

In an embodiment, the switching unit may include an interlock contact portion configured to prevent an interruption operation. The interlock contact portion may be operated when an interruption operation of the circuit breaker should be prevented. The interlock contact portion may be closed at ordinary times but is open when operated, thereby preventing the interruption operation signal and the interruption monitoring signal from being transmitted to the switching unit.

In an embodiment, if the interruption monitoring signal is not transmitted to the switching unit as the interlock contact portion is open, the controller may determine that an interruption operation is not required.

The present invention can have the following advantages.

Firstly, the circuit breaker can have a simplified structure through an integrated control contact for transmitting a control signal.

Secondly, as the structure of the circuit breaker is simplified due to the integrated control contact for transmitting a control signal, the circuit breaker can be designed and controlled more easily and simply.

Thirdly, as a control signal for an interruption operation and an interruption monitoring is transmitted through the integrated control contact, a malfunction of the circuit breaker due to separation of control contacts can be prevented.

Fourthly, as a control signal for an interruption operation and an interruption monitoring function is transmitted through the integrated control contact, an interruption monitoring function can be smoothly performed even when an interlock which prevents an operation of the circuit breaker is set.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a sequence view 1 illustrating a configuration and an operation of a circuit breaker in accordance with the conventional art;
FIG. 2A is a sequence view 2A illustrating a configuration and an operation of a circuit breaker in accordance with the conventional art;
FIG. 2B is a sequence view 2B illustrating a configuration and an operation of a circuit breaker in accordance with the conventional art;
FIG. 3 is a sequence view 3 illustrating a configuration and an operation of a circuit breaker in accordance with the conventional art;
FIG. 4 is a view illustrating a configuration of a circuit breaker according to the present invention;
FIG. 5 is a view illustrating a configuration of a circuit breaker according to an embodiment of the present invention; and
FIG. 6 is a flowchart illustrating a method of controlling a circuit breaker according to the present invention.

### DETAILED DESCRIPTION OF THE INVENTION

The present invention may be applied to a circuit breaker and a method of controlling the same. However, the present invention may be applied to not only all of the existing circuit breakers and methods of controlling the same, but also an electronic contactor, a relay, an earth leakage breaker, a switchgear, an equipment protection device, an equipment control device, a measuring device, and a control method thereof. Especially, the present invention may be applied to a protection relay and a circuit breaker each including a programmable logic controller (PLC).

Unless differently defined, all the terms used herein with including technical or scientific terms have the same meaning as terms generally understood by those skilled in the art relating to the field of the present invention. Terms defined in a general dictionary should be understood so as to have the same meanings as contextual meanings of the related art. Unless definitely defined in the present invention, the terms are not interpreted as ideal or excessively formal meanings. Furthermore, when the technical terms used in the present invention are unsuitable technical terms that do not precisely express the techniques of the present invention, the unsuitable technical terms should be replaced by suitable technical terms that can be understood by those skilled in the art. The general terms used in the present invention should be interpreted based on the previous or next contexts, but should not be interpreted as an excessively narrowed meaning.

A singular expression includes a plural concept unless there is a contextually distinctive difference therebetween. In the present invention, a term of "include" or "have" should not be interpreted as if it absolutely includes a plurality of components or steps of the specification. Rather, the term of "include" or "have" may not include some components or some steps, or may further include additional components.

Description will now be given in detail of the exemplary embodiments, with reference to the accompanying drawings. For the sake of brief description with reference to the drawings, the same or equivalent components will be provided with the same reference numbers, and description thereof will not be repeated.

If it is regarded that detailed descriptions of the related art are not within the range of the present invention, the detailed descriptions will be omitted. Furthermore, it should also be understood that embodiments are not limited by any of the details of the foregoing description, but rather should be construed broadly within its spirit and scope and it is intended that the present invention cover modifications and variations of this invention provided they come within the scope of the appended claims and their equivalents.

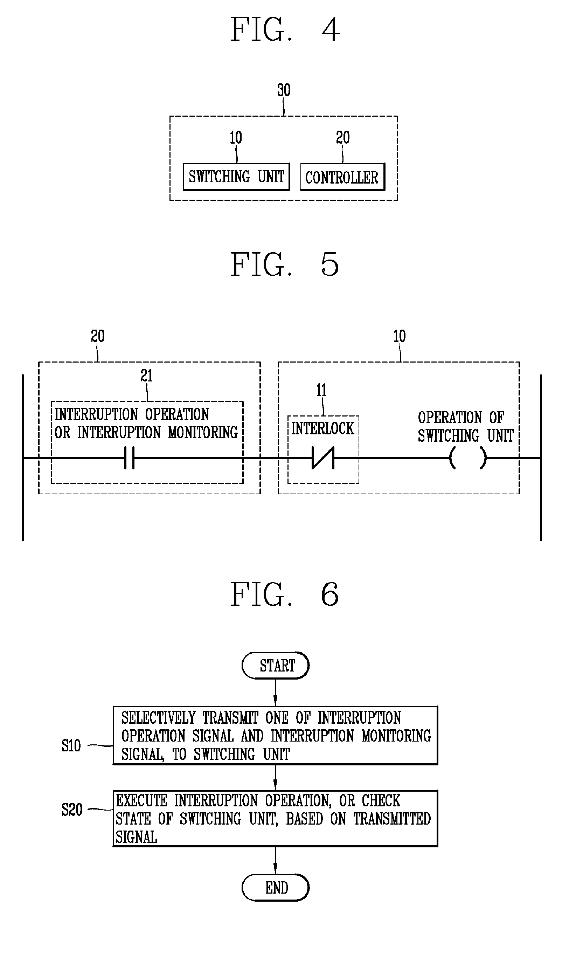

Hereinafter, a circuit breaker and a method of controlling the same according to the present invention will be explained in more detail with reference to FIGS. 4 and 5.

FIG. 4 is a view illustrating a configuration of a circuit breaker according to the present invention, and FIG. 5 is a view illustrating a configuration of a circuit breaker according to an embodiment of the present invention.

Firstly, a general configuration of a circuit breaker will be explained.

The circuit breaker means a protection device installed on a line where a current flows.

The circuit breaker may detect an over-current flowing on the line, and may open and close the line so that the over-current may not flow on the line.

The circuit breaker may be installed on the line, and may be configured to detect an over-current flowing on the line and to open and close the line.

For instance, the circuit breaker may include a detection unit configured to detect an over-current flowing on the line, a switching unit (or a switch) configured to open and close the line, a controller configured to control the components, etc.

As shown in FIG. 4, the circuit breaker 30 according to the present invention includes a switching unit 10 configured to perform an interruption operation of the circuit breaker 30, and a controller 20 configured to transmit a control signal for controlling the switching unit 10 to the switching unit 10, through an integrated control contact. The controller 20 is configured to selectively transmit, to the switching unit 10, an interruption operation signal for performing an interruption operation, or an interruption monitoring signal for checking whether the interruption operation is executable or not based on a state of the switching unit 10.

The circuit breaker 30, which includes the switching unit 10 and the controller 20, may be installed on a line where a current flows.

The circuit breaker 30 may further include a detection unit configured to detect an over-current flowing on the line.

The detection unit may include a current transformer (CT) configured to detect a current.

The circuit breaker 30 may perform an interruption operation by the switching unit 10 when an over-current is detected.

The switching unit 10 may be closed at ordinary times, but may be open when operated.

That is, the switching unit 10 may allow a current to flow on the line by being closed at ordinary times, but may interrupt the line by being open when an over-current is detected.

The switching unit 10 may be operated by the interruption operation signal transmitted from the controller 20.

By the interruption operation signal, the switching unit 10 which is closed at ordinary times may be open.

The interruption operation signal may be transmitted to the switching unit 10 from the controller 20 when an over-current is detected.

The interruption operation signal may be transmitted to the switching unit 10 from the controller 20, when an interruption operation of the circuit breaker 30 is required, e.g., when the circuit breaker 30 is manually operated.

The interruption operation signal may be transmitted to the switching unit 10 through the control contact, such that the switching unit 10 is open.

Based on the interruption monitoring signal, an open or closed state of the switching unit 10 which is closed at ordinary times may be checked.

In case of checking whether the switching unit 10 can perform the interruption operation or not, the interruption monitoring signal may be transmitted to the switching unit 10 from the controller 20.

For instance, when a user manually manipulates the circuit breaker 30 so as to check whether an interruption operation of the circuit breaker 30 is executable or not, the interruption monitoring signal may be transmitted to the switching unit 10 from the controller 20.

The interruption monitoring signal may be transmitted to the switching unit 10 through the control contact, and an open or closed state of the switching unit 10 may be checked based on the interruption monitoring signal.

The controller 20 may selectively transmit one of the interruption operation signal and the interruption monitoring signal to the switching unit 10, through the control contact.

When an over-current is detected or the circuit breaker 30 is manually operated, the controller 20 may transmit one of the interruption operation signal and the interruption monitoring signal to the switching unit 10.

For instance, if the circuit breaker 30 is manually operated for an interruption operation because repair/check of the circuit breaker 30, repair/check of the line, or the interruption operation of the circuit breaker 30 is required, the controller 20 may transmit the interruption operation signal to the switching unit 10.

As another example, if the circuit breaker 30 is manually operated for interruption monitoring because checking whether the interruption operation of the circuit breaker 30 is executable or not is required, the controller 20 may transmit the interruption monitoring signal to the switching unit 10.

As shown in FIG. 5, the control contact 21 may be a contact included in the controller 20 and connected to the switching unit 10 such that a control signal is transmitted to the switching unit 10.

The control contact 21 may be an electronic switching contact.

The control contact 21 may be a contact open and closed when an over-current is detected or when the circuit breaker 30 is manually operated.

The control contact 21 may be a contact which is open at ordinary times, but is closed when one of the interruption operation signal and the interruption monitoring signal is transmitted to the switching unit 10, such that one of the interruption operation signal and the interruption monitoring signal is transmitted to the switching unit 10.

If the switching unit 10 is closed as a determination result by the interruption monitoring signal transmitted to the switching unit 10, the controller 20 may determine that an interruption operation is executable.

More specifically, if the switching unit 10 is closed as a determination result by the interruption monitoring signal transmitted to the switching unit 10, the controller 20 may determine that the switching unit 10 is in an ordinary state, a standby state for the interruption operation. Thus, the controller 20 may determine that an interruption operation of the switching unit 10 is executable.

If the switching unit 10 is open as a determination result by the interruption monitoring signal transmitted to the switching unit 10, the controller 20 may determine that an interruption operation is being executed.

More specifically, if the switching unit 10 is open as a determination result by the interruption monitoring signal transmitted to the switching unit 10, the controller 20 may determine that the switching unit 10 is executing an interruption operation. Thus, the controller 20 may determine that an interruption operation of the switching unit 10 is being executed.

If the interruption monitoring signal is not transmitted to the switching unit 10, the controller 20 may determine that an interruption operation is not required.

If it is determined, based on the interruption monitoring signal transmitted to the switching unit 10, that an interruption operation of the switching unit 10 is being executed (i.e., the switching unit 10 is open), the controller 20 may determine that an interruption operation is not required.

The switching unit 10 may include an interlock contact portion 11 configured to prevent an interruption operation. The interlock contact portion 11 is operated when an interruption operation of the circuit breaker 30 should be prevented. The interlock contact portion 11 is closed at ordinary times but is open when operated, thereby preventing the control signal from being transmitted to the switching unit 10.

The interlock contact portion 11 may be controlled by the controller 20.

The interlock contact portion 11 may be provided on a line to which the switching unit 10 and the controller 20 are connected.

The interlock contact portion 11 may be provided on a line to which the switching unit 10 and the controller 20 are connected, and may prevent the interruption operation signal and the interruption monitoring signal from being transmitted to the switching unit 10.

The interlock contact portion 11 may be operated according to whether another device interworked with the circuit breaker 30 is operated or not.

For instance, if another device interworked with the circuit breaker 30 disconnects the line, an interruption operation of the circuit breaker 30 is not required. Thus, the interlock contact portion 11 is operated to prevent an interruption operation of the circuit breaker 30.

If the interruption monitoring signal is not transmitted to the switching unit 10 as the interlock contact portion 11 is open, the controller 20 may determine that an interruption operation is not required.

More specifically, if the interlock contact portion 11 is open as an interruption operation is not required, the interruption monitoring signal is not transmitted to the switching unit 10 by the interlock contact portion 11. Thus, the controller 20 may determine that an interruption operation of the switching unit 10 is not required.

Hereinafter, a method of controlling a circuit breaker according to the present invention will be explained in more detail with reference to FIG. 6.

FIG. 6 is a flowchart illustrating a method of controlling a circuit breaker according to the present invention.

As shown in FIG. 6, the method of controlling a circuit breaker according to the present invention includes selectively transmitting, to a switching unit, one of an interruption operation signal for executing an interruption operation, and an interruption monitoring signal for checking whether the interruption operation is executable or not based on a state of the switching unit which performs the interruption operation (S10); and operating the switching unit according to the signal, or checking a state of the switching unit (S20).

The switching unit may be closed at ordinary times, but may be open when operated. The switching unit may be open by the interruption operation signal.

That is, the switching unit may be operated by the interruption operation signal.

The interruption operation signal may be transmitted to the switching unit when an over-current is detected from the circuit breaker.

The interruption operation signal may be transmitted to the switching unit, when an interruption operation of the circuit breaker is required, e.g., when the circuit breaker is manually operated.

The interruption operation signal may be transmitted to the switching unit through a control contact, such that the switching unit is open.

Based on the interruption monitoring signal, an open or closed state of the switching unit which is closed at ordinary times may be checked.

In case of checking whether the switching unit can perform the interruption operation or not, the interruption monitoring signal may be transmitted to the switching unit.

For instance, when a user manually manipulates the circuit breaker so as to check whether an interruption operation of the circuit breaker is executable or not, the interruption monitoring signal may be transmitted to the switching unit.

The interruption monitoring signal may be transmitted to the switching unit through the control contact, thereby checking an open or closed state of the switching unit.

In the step (S10) of selectively transmitting one of the interruption operation signal and the interruption monitoring signal to the switching unit, when an over-current is detected, or when the circuit breaker is manually manipulated, one of the interruption operation signal and the interruption monitoring signal may be transmitted to the switching unit.

For instance, if the circuit breaker is manually manipulated for an interruption operation because repair/check of the circuit breaker, repair/check of a line, or the interruption operation of the circuit breaker is required, the interruption operation signal may be transmitted to the switching unit.

Alternatively, when a user manually operates the circuit breaker so as to check whether the interruption operation of the circuit breaker is executable or not, the interruption monitoring signal may be transmitted to the switching unit.

The control contact may be a contact connected to the switching unit such that a control signal is transmitted to the switching unit.

The control contact may be a contact open and closed when an over-current is detected or when the circuit breaker is manually operated.

The control contact may be a contact which is open at ordinary times, but is closed when one of the interruption operation signal and the interruption monitoring signal is transmitted to the switching unit, such that one of the interruption operation signal and the interruption monitoring signal is transmitted to the switching unit.

In the step (S20) of operating the switching unit according to the signal, or checking a state of the switching unit, if the switching unit is closed as a determination result by the interruption monitoring signal transmitted to the switching unit, it may be determined that an interruption operation is executable.

In the step (S20) of operating the switching unit according to the signal, or checking a state of the switching unit, if the switching unit is open as a determination result by the interruption monitoring signal transmitted to the switching unit, it may be determined that an interruption operation is being executed.

In the step (S20) of operating the switching unit according to the signal, or checking a state of the switching unit, if the interruption monitoring signal is not transmitted to the switching unit, it may be determined that an interruption operation is not required.

In the step (S20) of operating the switching unit according to the signal, or checking a state of the switching unit, if it is determined, based on the interruption monitoring signal transmitted to the switching unit, that an interruption operation of the switching unit is being executed (i.e., the switching unit is open), the controller 20 may determine that an interruption operation is not required.

The switching unit may include an interlock contact portion configured to prevent an interruption operation. The interlock contact portion is operated when an interruption operation of the circuit breaker should be prevented. The interlock contact portion is closed at ordinary times but is open when operated, thereby preventing the control signal from being transmitted to the switching unit.

The interlock contact portion may be provided on a line to which the switching unit is connected, and may prevent the interruption operation signal and the interruption monitoring signal from being transmitted to the switching unit.

The interlock contact portion may be operated according to whether another device interworked with the circuit breaker is operated or not.

In the step (S20) of operating the switching unit according to the signal, or checking a state of the switching unit, if the interruption monitoring signal is not transmitted to the switching unit as the interlock contact portion is open, the circuit breaker may determine that an interruption operation is not required.

The present invention may have the following advantages.

Firstly, the embodiments of the present invention may be executed in the form of a program for controlling the circuit breaker, or a sequence control program of a programmable logic controller (PLC) for controlling the circuit breaker.

Secondly, the embodiments of the present invention may be applied to not only all of the existing circuit breakers and methods of controlling the same, but also an electronic contactor, a relay, an earth leakage breaker, a switchgear, an equipment protection device, an equipment control device, a measuring device, and a control method thereof.

Thirdly, the embodiments of the present invention may be applied to a protection relay and a circuit breaker each including a programmable logic controller (PLC).

Fourthly, the embodiments of the present invention may be executed in the form of a program for controlling the circuit breaker, or a sequence control program of a programmable logic controller (PLC) for controlling the circuit breaker.

Fifthly, as a control contact for transmitting a control signal is integrated, the circuit breaker can have a simplified structure.

Sixthly, as the structure of the circuit breaker is simplified due to the integrated control contact for transmitting a control signal, the circuit breaker can be designed and controlled more easily and simply.

Seventhly, as a control signal for an interruption operation and an interruption monitoring is transmitted through the integrated control contact, a malfunction of the circuit breaker due to separation of control contacts can be prevented.

Eighthly, as a control signal for an interruption operation and an interruption monitoring is transmitted through the integrated control contact, an interruption monitoring function can be smoothly performed even when an interlock which prevents an operation of the circuit breaker is set.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

## Claims

1. A circuit breaker (30), comprising:
a switching unit (10) configured to perform an interruption operation of the circuit breaker (30); and
a controller (20) configured to transmit a control signal for controlling the switching unit (10) to the switching unit (10) through an integrated control contact (21),
wherein the controller (20) selectively transmits, to the switching unit (10), one of an interruption operation signal for executing the interruption operation, and an interruption monitoring signal for checking whether the interruption operation is executable or not based on a state of the switching unit.

2. The circuit breaker (30) of claim 1, wherein based on the interruption monitoring signal, an open or closed state of the switching unit (10) which is closed at ordinary times is checked.

3. The circuit breaker (30) of one of claims 1 and 2, wherein if the switching unit (10) is closed as a determination result by the interruption monitoring signal transmitted to the switching unit (10), the controller (20) determines that an interruption operation is executable, and
wherein if the switching unit (10) is open as a determination result by the interruption monitoring signal transmitted to the switching unit (10), the controller (20) determines that an interruption operation is being executed.

4. The circuit breaker (30) of one of claims 1 to 3, wherein the switching unit (10) includes an interlock contact portion (11) configured to prevent an interruption operation,
wherein the interlock contact portion (11) is operated when an interruption operation of the circuit breaker (30) should be prevented, and
wherein the interlock contact portion (11) is closed at ordinary times but is open when operated, thereby preventing the control signal from being transmitted to the switching unit (10).

5. The circuit breaker of claim 4, wherein if the interruption monitoring signal is not transmitted to the switching unit (10) as the interlock contact portion (11) is open, the controller (20) determines that an interruption operation is not required.

6. A method of controlling a circuit breaker, comprising:
selectively transmitting, to the switching unit, one of an interruption operation signal for executing an interruption operation, and an interruption monitoring signal for checking whether the interruption operation is executable or not based on a state of the switching unit (S10); and
operating the switching unit according to the signal, or checking a state of the switching unit (S20).

7. The method of claim 6, wherein the switching unit is closed at ordinary times, but is open when operated, and
wherein the switching unit is open by the interruption operation signal.

8. The method of one of claims 6 and 7, wherein the switching unit includes an interlock contact portion configured to prevent an interruption operation.

9. The method of claim 8, wherein the interlock contact portion is operated when an interruption operation of the circuit breaker should be prevented, and
wherein the interlock contact portion is closed at ordinary times but is open when operated, thereby preventing the interruption operation signal and the interruption monitoring signal from being transmitted to the switching unit.

10. The method of claim 9, wherein in the step of operating the switching unit according to the signal, or checking a state of the switching unit (S20), if the interruption monitoring signal is not transmitted to the switching unit as the interlock contact portion is open, the controller determines that an interruption operation is not required.
